# EUROPÄISCHE PATENTANMELDUNG

(11) **EP 1 873 192 A2**
(43) Veröffentlichungstag der Anmeldung: **02.01.2008**
(21) Anmeldenummer: 07011842.7
(22) Anmeldetag: 16.06.2007
(51) Int. Cl.: C08J 5/12, C09J 5/02

(54) **Verfahren zum Verbinden zweier Teile und Mittel zum Durchführen des Verfahrens**

(30) Priorität: 28.06.2006 DE 102006029696
(71) Anmelder: RICHARD FRITZ GMBH + CO. KG, 74354 Besigheim (DE)
(72) Erfinder: Schön, Michael, 73655 Plüderhausen (DE)
(74) Vertreter: Kastner, Hermann

(57) **Zusammenfassung**

Bei dem Verfahren zum Verbinden zweier Teile besteht der eine Teil (Primärteil) aus einem anorganischen Werkstoff, aus einem kratzfest beschichteten Polykarbonat oder aus einem Polypropylen (PP) und der andere Teil (Sekundärteil) aus einem Polypropylen (PP). Bei dem Sekundärteil wird die Oberfläche zumindest des Verbindungsbereiches durch eine Vorbehandlung aktiviert, bei der die Oberflächenspannung des PP erhöht wird. Bei einem aus PP bestehenden Primärteil wird ebenfalls die Oberfläche zumindest des Verbindungsbereiches durch eine Vorbehandlung aktiviert, bei der die Oberflächenspannung des PP erhöht wird. Auf den Verbindungsbereich des Primärteils oder auf den Verbindungsbereich des Sekundärteils wird ein Klebstoff aufgetragen, der ein MS-Polymer oder ein silan-modifiziertes Polyurethan (SMP oder Hybrid) ist. Der Primärteil und der Sekundärteil werden mit ihren Verbindungsbereichen aneinander angedrückt und miteinander verbunden.

## Beschreibung

Beim Verbinden zweier Teile, von denen der eine Teil (Primärteil) aus einem anorganischen Werkstoff oder aus Polypropylen (PP) besteht und der andere Teil (Sekundärteil) aus Polypropylen besteht, musste man bisher ganz bestimmte Vorgehensweisen einhalten, wenn die Verbindung stabil, insbesondere gegen Feuchtigkeit stabil sein sollte und wenn eine kohäsive Trennung der Verbindung erreicht werden sollte, das heißt, dass beim Auftreten einer ausreichend großen Trennkraft die Trennstelle innerhalb der Klebstoffschicht liegt.

Wenn man Teile aus PP kalt verkleben wollte, musste bisher trotz einer Vorbehandlung dieser Teile durch Atmosphärendruckplasma, Niederdruckplasma, Beflammen, Fluorieren oder Coronabehandlung im Verbindungsbereich der Teile aus PP unbedingt ein Haftvermittler aufgetragen werden, damit man die beiden Teile etwa mit einem Ein- oder Zweikomponenten-Polyurethan-Klebstoff verkleben konnte.

Der Erfindung liegt die Aufgabe zugrunde, ein Verfahren zum Verbinden eines Primärteils und eines Sekundärteils anzugeben, bei dem bei den Teilen aus PP nach deren Vorbehandlung auf die sonst übliche Verwendung eines Haftvermittlers verzichtet werden kann. Diese Aufgabe wird durch ein Verfahren nach Anspruch 1 oder 2 gelöst.

Dadurch, dass auf den Verbindungsbereich des Primärteils oder des Sekundärteils ein Klebstoff aufgetragen wird, der ein MS-Polymer oder ein silan-modifiziertes Polyurethan (SMP oder Hybrid) ist, wird eine kohäsive Verbindung beider Teile erreicht, ohne dass zuvor ein Haftvermittler aufgetragen worden ist. Dadurch entfällt der sonst erforderliche Arbeitsaufwand für das Auftragen eines Haftvermittlers. Dadurch entfallen aber auch andere Nachteile, wie z.B. der Zeitaufwand für das Ablüften des Haftvermittlers oder das Absaugen der Lösungsmitteldämpfe des Haftvermittlers.

Die Ausgestaltung des Verfahrens nach Anspruch 5 zeigt die Vielfältigkeit des Verfahrens hinsichtlich der Werkstoffwahl für den Primärteils auf.

Bei einer Ausgestaltung des Verfahrens nach Anspruch 6 Werden die Teile optimal für das Verbinden miteinander vorbereitet.

Der Erfindung liegt auch die Aufgabe zugrunde, ein Mittel anzugeben, mit dem die Verfahren mit sehr gutem Erfolg durchgeführt werden können. Diese Aufgabe wird mit einem Mittel nach Anspruch 7 oder 8 gelöst.

Dadurch, dass gemäß Anspruch 7 als Klebstoff ein MS-Polymer oder ein silan-modifiziertes Polyurethan (SMP oder Hybrid) als Einkomponentenklebstoff verwendet wird, der mittels Luftfeuchtigkeit aushärtet, wird eine gute Verbindung der Teile erreicht. Dabei ist der gerätetechnische Aufwand für das Auftragen des Klebstoffes verhältnismäßig gering. Dafür muss eine längere Aushärtezeit abgewartet werden, die von der Schichtdicke des Klebstoffes und vom Feuchtigkeitsgrad der umgebenden Luft abhängt.

Dadurch, dass gemäß Anspruch 8 als Klebstoff ein MS-Polymer oder ein silan-modifiziertes Polyurethan (SMP oder Hybrid) als Zweikomponentenklebstoff verwendet wird, dem vor dem Auftragen eine wasserabgebende Substanz als zweite Komponente beigemischt wird, wird ebenfalls eine gute Verbindung der Teile erreicht. Dabei ist der gerätetechnische Aufwand für das Auftragen des Klebstoffes zwar etwas größer. Dafür ist aber die Aushärtezeit unabhängig von der Schichtdicke des Klebstoffes und vom Feuchtigkeitsgrad der umgebenden Luft und insgesamt erheblich kürzer.

Im Folgenden wird die Erfindung anhand einiger in der Zeichnung dargestellter Ausführungsbeispiele näher erläutert. Es zeigen:
- Fig. 1: einen ausschnittweise dargestellten Schnitt durch eine Glasscheibe als Primärteil mit einer Platte aus PP als Sekundärteil;
- Fig. 2 Und 3: je einen ausschnittweise dargestellten Schnitt durch eine Glasscheibe als Primärteil mit einem Rahmenprofil aus PP als Sekundärteil im Ausgangszustand bzw. im Endzustand;
- Fig. 4: einen ausschnittweise dargestellten Schnitt durch ein Rahmenprofil als Primärteil mit einer Zentriervorrichtung als Sekundärteil.

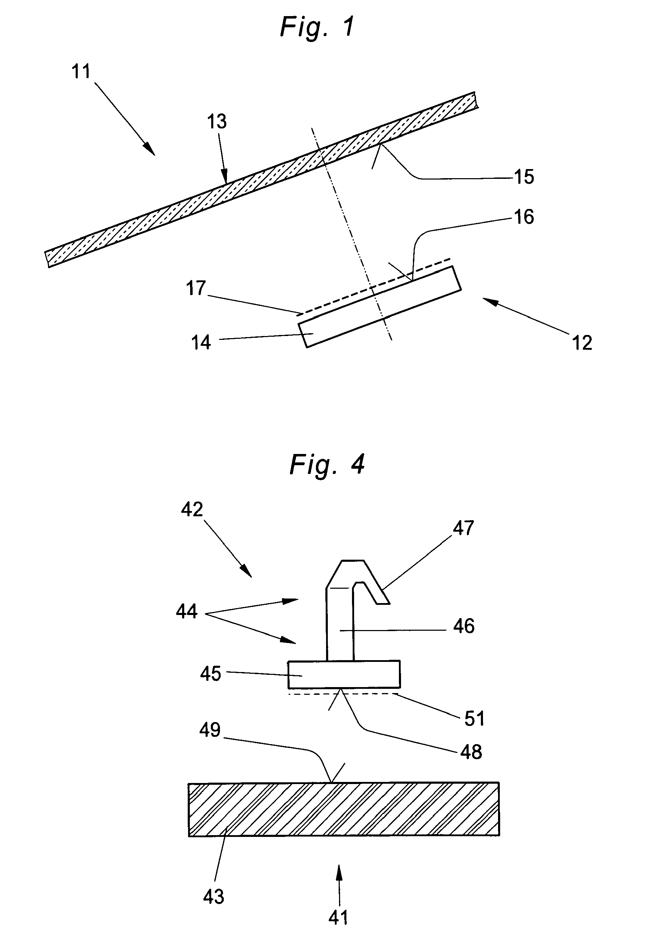

Bei dem aus Fig.1 ersichtlichen Ausführungsbeispiel wird ein Primärteil 11 mit einem Sekundärteil 12 verbunden.

Der Primärteil 11 wird durch eine Glasscheibe 13 gebildet und besteht aus Silikatglas oder aus kratzfest beschichtetem Polycarbonat. Der Sekundärteil 12 ist ebenfalls scheibenförmig ausgebildet und wird durch eine Platte 14 gebildet, die aus einem Polypropylen (PP) hergestellt ist. Die Ausmaße der Platte 14 sind kleiner als diejenigen der Glasscheibe 13.

Die dem Primärteil 11 zugewandt Oberfläche der Platte 14 bildet den Verbindungsbereich 16 des Sekundärteils 12. Dementsprechend bildet der ihr gegenüber liegende Flächenbereich des Primärteils 11 dessen Verbindungsbereich 15. Die Gestalt des Sekundärteils 12 ist auf die Gestalt des Verbindungsbereiches 15 des Primärteils 11 abgestimmt.

Der Primärteil 11 und der Sekundärteil 12 werden auf folgende Weise miteinander verbunden:

Bei dem aus PP bestehenden Sekundärteil 12 wird zumindest sein Verbindungsbereich 16 durch eine Vorbehandlung aktiviert, bei der die Oberflächenspannung des PP erhöht wird. Bei größeren Abmessungen des Sekundärteils 12 wird im Allgemeinen nur dessen Verbindungsbereich 15 vorbehandelt, und zwar mit einem atmosphärischen Plasma, durch Beflammen, mit einer Korona-Behandlung oder durch Fluorieren. Bei ausreichend kleinen Abmessungen des Sekundärteils 12 können mehrere Sekundärteile zugleich in einem verschließbaren Behälter mit einem Niederdruck-Plasma behandelt werden.

Auf den Verbindungsbereich 16 des Sekundärteils 12 wird ein Klebstoff 17 aufgetragen, der ein MS-Polymer oder ein Silan-modifiziertes Polyurethan (SMP oder Hybrid) ist. Ein solcher Klebstoff kann als Einkomponenten-Klebstoff verwendet werden, der mittels Luftfeuchtigkeit aushärtet. Er kann aber auch als Zweikomponenten-Klebstoff verwendet werden, dem vor dem Auftragen eine Wasser abgebende Substanz als zweite Komponente beigemischt wird.

Nach dem Auftragen des Klebstoffs 17 wird der Sekundärteil 12 mit seinem Verbindungsbereich an denjenigen des Primärteils 11 angedrückt und die beiden Teile dadurch miteinander verbunden.

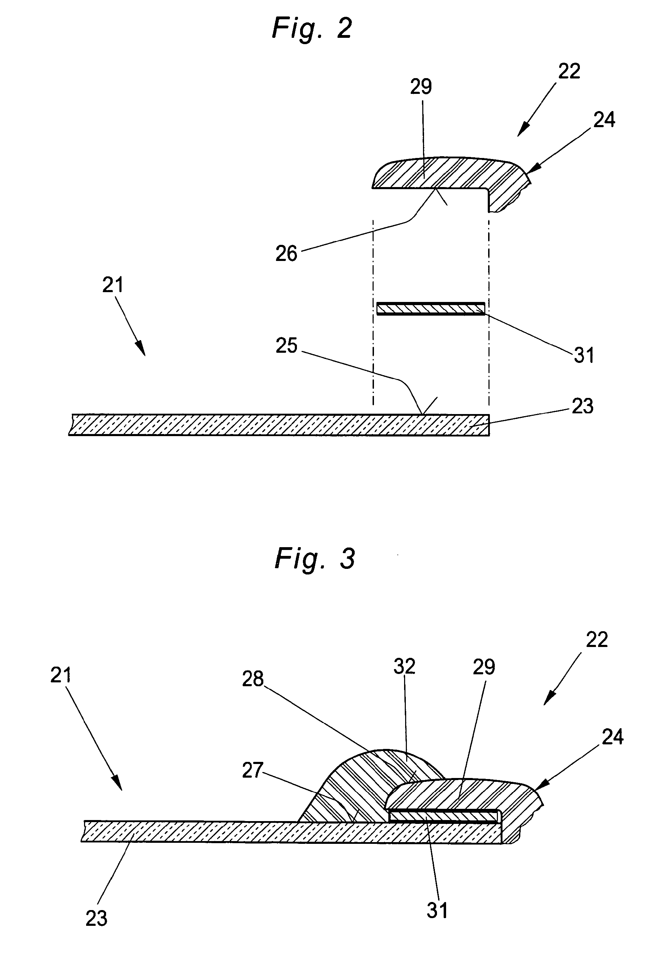

Bei dem aus Fig.2 und Fig.3 ersichtlichen Ausführungs beispiel sind ein Primärteil 21 und ein Sekundärteil 22 vorhanden.

Der Primärteil 21 wird wiederum durch eine Glasscheibe 23 gebildet. Der Sekundärteil 22 ist als Rahmen 24 ausgebildet, der entlang dem Randbereich der Glasscheibe 23 angeordnet ist. Der Rahmen 24 besteht aus PP. Er wird als Extrudat oder Spritzformteil vorgefertigt.

Das Querschnittsprofil des Rahmens 24 ist in dem der Glasscheibe 23 benachbarten Flächenabschnitt L-förmig ausgebildet. Der daran anschließende Flächenabschnitt des Rahmenprofils richtet sich im Allgemeinen nach den Anforderungen am Einsatzort der Glasscheibe 23 und ist deshalb nicht im Einzelnen dargestellt.

Bei dem Primärteil 21 und dem Sekundärteil 22 liegen je zwei Verbindungsbereiche vor, und zwar ein erster oder innerer Verbindungsbereich 25 und 26 (Fig.2) und ein zweiter oder äußerer Verbindungsbereich 27 und 28 (Fig.3).

Am Primärteil 21 wird der innere Verbindungsbereich 25 durch denjenigen Flächenabschnitt der Glasscheibe 23 gebildet, der dem Profilschenkel 29 des L-Profils des Rahmens 24 gegenüber liegt, der zu ihr parallel ausgerichtet ist. Dementsprechend wird am Sekundärteil 22 der innere Verbindungsbereich 26 durch die der Glasscheibe 23 zugekehrte Fläche des Profilschenkels 29 gebildet.

Der Primärteil 21 und der Sekundärteil 22 werden in einer ersten Stufe dadurch miteinander verbunden, dass am inneren Verbindungsbereich 25 der Glasscheibe 23 oder am inneren Verbindungsbereich 26 des Rahmens 24 ein doppelseitig klebendes Klebeband 31 angebracht wird und dass daran anschließend der innere Verbindungsbereich 26 oder 25 des anderen Teils angelegt und angedrückt wird (Fig.3).

Am Primärteil 21 wird der zweite oder äußere Verbindungsbereich 27 durch den an den Profilschenkeln 29 des Rahmens 24 anschließenden Flächenabschnitt der Glasscheibe 23 gebildet (Fig.3). Am Sekundärteil 22 wird der zweite oder äußere Verbindungsbereich 28 durch die Außenseite des Profilschenkels 29 gebildet, der neben dem zweiten Verbindungsbereich 27 des Primärteils 21 gelegen ist.

Am Sekundärteil 22 aus PP wird der äußere Verbindungsbereich 28 einer Vorbehandlung unterzogen, wie sie bei dem Ausführungsbeispiel gemäß Fig.1 für den Sekundärteil 12 erläutert worden ist.

Die erste Verbindung zwischen dem Primärteil 1 und dem Sekundärteil 22 mittels des Klebebandes 31 kann auch als Fixierung der beiden Teile betrachtet werden. Um diese als Verbindung zu verstärken und abzusichern, wird eine zweite Verbindung hergestellt. Dazu wird sowohl auf den äußeren Verbindungsbereich 27 des Primärteils 21 wie auch auf den äußeren Verbindungsbereich 28 des Sekundärteils 22 ein gemeinsamer Klebstoffauftrag 32 aufgebracht, der die beiden äußeren Verbindungsbereiche 27 und 28 gemeinsam überdeckt und nach dem Aushärten beide Teile miteinander dauerhaft verbindet (Fig.3). Die Dicke des Klebstoffauftrages 32 richtet sich danach, welche Kräfte er neben der ersten Verbindung durch das Klebeband 31 aufnehmen muss.

Selbstverständlich können ein Primärteil und ein Sekundärteil, die je einen äußeren Verbindungsbereich aufweisen, die einander benachbart sind oder gar aneinander anschließen, allein mittels des gemeinsamen Klebstoffauftrages 32 auf Ihren beiden Verbindungsbereichen miteinander verbunden werden, ohne dass dem eine Verbindung etwa mittels eines Klebebandes oder dergleichen vorausgeht.

Bei dem aus Fig.4 ersichtlichen Ausführungsbeispiel sind ein Primärteil 41 und ein Sekundärteil 42 vorhanden.

Der Primärteil 41 wird durch einen Rahmenteil 43 gebildet, von dem lediglich ein rechteckiger Profilabschnitt dargestellt ist. Der Rahmenteil 43 ist aus PP hergestellt. Der Sekundärteil 42 ist als Zentrierstift 44 ausgebildet, der zugleich eine Haltefunktion hat. Er weist eine scheibenförmige Grundplatte 45 und einen in deren Mitte senkrecht daran anschließenden Schaftteil 46 auf. Am freien Ende des Schaftteils 46 schließt ein Schnapphacken 47 an, der vom Ende des Schaftteils 46 aus schräg rückwärts ausgerichtet ist. Der Zentrierstift 44 ist ebenfalls aus PP hergestellt.

Eine solche Kombination von Primärteil und Sekundärteil kommt beispielsweise dann in betracht, wenn Prototypen einer Scheibe mit einem Rahmen aus PP vorliegen, die mit Zentrierstiften aus PP versehen werden sollen, bei denen die genaue Position der Zentrierstifte am Rahmen noch nicht festliegt, sondern erst ermittelt werden soll. Eine solche Kombination kommt auch in Betracht, wenn der Rahmen aus einem ungefüllten PP hergestellt werden soll, die Zentrierstifte jedoch aus einem PP mit Glasfaseranteil hergestellt werden sollen.

Beim Verbinden des Primärteils 41 und des Sekundärteils 42, die beide aus PP bestehen, müssen die Verbindungsbereiche beide Teile vorbehandelt werden, wie das oben in Bezug auf die Platte 14 des Ausführungsbeispieles gemäß Fig.1 beschrieben worden ist.

Am Sekundärteil 42 wird der Verbindungsbereich 48 durch die vom Schaft 46 abgekehrte Oberfläche der Grundplatte 45 gebildet. Am Primärteil 41 wird die Verbindungsfläche 49 durch denjenigen Flächenabschnitt des Rahmenteils 43 gebildet, der der Grundplatte 45 des Sekundärteils 42 gegenüber liegt. Zweckmäßiger Weise werden die Ausmaße des Verbindungsbereiches 49 etwas größer als die Grundfläche der Platte 45 gewählt.

Zum Verbinden des Primärteils und des Sekundärteils wird vorzugsweise am Verbindungsbereich 48 des Sekundärteils 42, d.h. an der Außenseite der Grundplatte 45, ein Klebstoff 51 aufgetragen, wie das bei dem Sekundärteil 12 des Ausführungsbeispiels gemäß Fig. 1 erläutert worden ist. Die Sekundärteile 42 werden in der gewünschten Position dem Primärteil 41 angenähert und an ihm angedrückt und damit beide Teile miteinander verbunden.

### Bezugszeichenliste

- 11: Primärteil
- 12: Sekundärteil
- 13: Glasscheibe
- 14: Platte
- 15: Verbindungsbereich
- 16: Verbindungsbereich
- 17: Klebstoffauftrag

- 21: Primärteil
- 22: Sekundärteil
- 23: Glasscheibe
- 24: Rahmen
- 25: Verbindungsbereich
- 26: Verbindungsbereich
- 27: Verbindungsbereich
- 28: Verbindungsbereich
- 29: Profilschenkel
- 31: Klebeband
- 32: Klebstoffauftrag

- 41: Primärteil
- 42: Sekundärteil
- 43: Rahmenteil
- 44: Zentrierstift
- 45: Grundplatte
- 46: Schaftteil
- 47: Schnapphaken
- 48: Verbindungsbereich
- 49: Verbindungsbereich
- 51: Klebstoffauftrag

## Patentansprüche

1. Verfahren zum Verbinden zweier Teile, mit den Merkmalen:
- der eine Teil (Primärteil) besteht aus einem anorganischen Werkstoff, aus einem kratzfest beschichteten Polykarbonat oder aus einem Polypropylen (PP),
- der andere Teil (Sekundärteil) besteht aus einem Polypropylen (PP),
- bei dem Sekundärteil wird die Oberfläche zumindest des Verbindungsbereiches durch eine Vorbehandlung aktiviert, bei der die Oberflächenspannung des PP erhöht wird.
- bei einem aus PP bestehenden Primärteil wird ebenfalls die Oberfläche zumindest des Verbindungsbereiches durch eine Vorbehandlung aktiviert, bei der die Oberflächenspannung des PP erhöht wird.
- auf den Verbindungsbereich des Primärteils oder auf den Verbindungsbereich des Sekundärteils wird ein Klebstoff aufgetragen, der ein MS-Polymer oder ein silan-modifiziertes Polyurethan (SMP oder Hybrid) ist,
- der Primärteil und der Sekundärteil werden mit ihren Verbindungsbereichen aneinander angedrückt und miteinander verbunden.

2. Verfahren zum Verbinden zweier Teile, mit den Merkmalen:
- der eine Teil (Primärteil) besteht aus einem anorganischen Werkstoff, aus einem kratzfest beschichteten Polykarbonat oder aus einem Polypropylen (PP),
- der andere Teil (Sekundärteil) besteht aus einem Polypropylen (PP),
- bei dem Sekundärteil wird die Oberfläche zumindest des Verbindungsbereiches durch eine Vorbehandlung aktiviert, bei der die Oberflächenspannung des PP erhöht wird.
- bei einem aus PP bestehenden Primärteil wird ebenfalls die Oberfläche zumindest des Verbindungsbereiches durch eine Vorbehandlung aktiviert, bei der die Oberflächenspannung des PP erhöht wird.
- der Primärteil und der Sekundärteil werden in ihrer vorbestimmten gegenseitigen Endlage positioniert,
- auf den Verbindungsbereich sowohl des Primärteils wie auch des Sekundärteils wird ein Klebstoff aufgetragen, der ein MS-Polymer oder ein silan-modifiziertes Polyurethan (SMP oder Hybrid) ist und der nach dem Aushärten beide Teile miteinander verbindet.

3. Verfahren nach Anspruch 1 oder 2, mit den Merkmalen:
- für den Sekundärteil und für den Primärteil aus PP werden als Werkstoff ausgewählt
- - ein gefülltes PP,
- - ein verstärktes PP oder
- - ein ungefülltes PP.

4. Verfahren nach Anspruch 3, mit den Merkmalen:
- für den Sekundärteil und für den Primärteil aus PP werden als Werkstoff ein Polypropylen ausgewählt, das ein PP Homopolymer oder ein PP Copolymer ist.

5. Verfahren nach Anspruch 1, mit den Merkmalen:
- für den Primärteil werden als Werkstoff ausgewählt
- - Glas,
- - Glaskeramik,
- - Leichtmetall,
- - Schwermetall oder
- - kratzfest beschichtetes Polykarbonat.

6. Verfahren nach einem der Ansprüche 1 bis 5, mit dem Merkmal:
- zumindest die Oberfläche des Verbindungsbereiches des Sekundärteils und eines aus PP bestehenden Primärteils wird behandelt
- - mit einem atmosphärischen Plasma,
- - mit einem Niederdruck-Plasma,
- - durch Beflammen,
- - mit einer Corona-Behandlung oder
- - durch Fluorieren.

7. Mittel zum Durchführen des Verfahrens nach einem der Ansprüche 1 bis 6, mit dem Merkmal:
- als Klebstoff wird ein MS-Polymer oder ein silan-modifiziertes Polyurethan (SMP oder Hybrid) als Einkomponentenklebstoff verwendet, der mittels Luftfeuchtigkeit aushärtet.

8. Mittel zum Durchführen des Verfahrens nach einem der Ansprüche 1 bis 6, mit dem Merkmal:
- als Klebstoff wird ein MS-Polymer oder ein silan-modifiziertes Polyurethan (SMP oder Hybrid) als Zweikomponentenklebstoff verwendet, dem vor dem Auftragen eine wasserabgebende Substanz als zweite Komponente beigemischt wird.
